Europäisches Patentamt

(19) European Patent Office

Office européen des brevets

(11) Numéro de publication: **0 027 972
B1**

(12) **FASCICULE DE BREVET EUROPEEN**

(51) Int. Cl.³: **C 04 B 35/56**

(45) Date de publication du fascicule du brevet:
14.03.84

(21) Numéro de dépôt: 80106334.8

(22) Date de dépôt: 17.10.80

(54) Procédé de fabrication d'une céramique dense en carbure de silicium.

(30) Priorité: 19.10.79 FR 7926064
27.08.80 FR 8018566

(43) Date de publication de la demande:
06.05.81 Bulletin 81/18

(45) Mention de la délivrance du brevet:
14.03.84 Bulletin 84/11

(84) Etats contractants désignés:
BE CH DE FR GB IT LI NL SE

(56) Documents cités:
EP - A - 0 004 031
FR - A - 1 395 946
FR - A - 2 360 534
FR - A - 2 375 152
GB - A - 2 016 524

(73) Titulaire: **COMPAGNIE GENERALE D'ELECTRICITE
Société anonyme dite:, 54, rue La Boétie, F-75382 Paris
Cedex 08 (FR)**

(72) Inventeur: **Broussaud, Daniel, Résidence du Grimpé
Villebon sur Yvette, F-91120 Palaiseau (FR)**

(74) Mandataire: **Weinmiller, Jürgen et al, Zeppelinstrasse 63,
D-8000 München 80 (DE)**

## Procédé de fabrication d'une céramique dense en carbure de silicium

La présente invention concerne un procédé de fabrication d'une céramique dense en carbure de silicium.

On connaît un procédé d'élaboration d'une céramique dense en carbure de silicium, décrit dans le périodique »Powder metallurgy international« volume 10, n° 2, 1978, pages 87 à 89. Le matériau de départ utilisé dans ce procédé est une poudre de carbure de silicium du type alpha. Ce matériau additionné d'essence est d'abord soumis à un traitement à l'acide fluorhydrique, suivi de plusieurs lavages, en vue d'éliminer la silice et l'oxygène résiduel présents dans la poudre. La poudre ainsi obtenue est moulue dans un broyeur à billes d'acier puis traitée à l'acide chlorhydrique pour éliminer le fer laissé par le broyage. Elle subit ensuite un traitement thermique à 700° C pour enlever le carbone libre résiduel, puis un second traitement à l'acide fluorhydrique. Après un traitement thermique à 1200° C sous argon, on ajoute à la poudre successivement du bore amorphe et un produit carboné formé de polyphénylène dissous dans du benzène. Après élimination du benzène par ventilation d'air, on réalise un échantillon par pressage de la poudre imprégnée d'acide oléique dans une matrice d'acier, à une pression de 100 N/mm². L'échantillon est enfin fritté sous argon à une température de l'ordre de 2100° C.

Le procédé décrit ci-dessus présente l'inconvénient d'être compliqué. Il comporte en effet deux traitements chimiques à l'acide fluorhydrique, de longue durée. De plus, ces traitements chimiques ne permettent pas d'éliminer totalement l'oxygène résiduel de la poudre, ce qui diminue la densité de la céramique obtenue.

La présente invention a pour but de pallier ces inconvénients et de mettre en oeuvre un procédé plus simple et plus efficace pour élaborer une céramique dense de carbure de silicium.

Ce but est atteint par le procédé d'élaboration d'une céramique dense en carbure de silicium selon l'invention, qui consiste:

— à former un mélange de poudres
   — en ajoutant du bore pulvérulent à une poudre de carbure de silicium en phase alpha,
   — en ajoutant à la poudre ainsi obtenue un produit carboné disposé dans un solvant, et
   — en séchant et en tamisant la suspension ainsi obtenue,
   la formation du mélange de poudres comportant en outre
   — un broyage fin d'au moins la poudre de carbure de silicium disposée dans un liquide organique volatil, ce broyage étant suivi d'un séchage,
   — et, avant l'addition du produit carboné, un traitement thermique d'au moins la poudre de carbure de silicium,

— puis à mettre en forme sous pression un échantillon du mélange de poudres et à fritter l'échantillon mis en forme sous atmosphère neutre à une température de l'ordre de 2100° C. Ce procédé est caractérisé en ce que:
   — le traitement thermique est effectué sous vide à une température comprise entre 1200° C et 1600° C,
   — l'addition de bore est réalisée avant le broyage, celui-ci s'effectuant ainsi sur les poudres de carbure de silicium et de bore mélangées,
   — le produit carboné est une laque phénolique,
   — et, après le traitement thermique et avant le frittage, le mélange est homogénéisé, puis séché et tamisé.

Des modes de mise en oeuvre préférés sont définis dans les revendications dépendantes.

Deux formes particulières d'exécution de l'objet de la présente invention sont décrites ci-dessous à titre d'exemple.

Selon la première forme d'exécution, on utilise au départ une poudre commerciale de carbure de silicium, de variété structurale alpha, obtenue par le procédé ACHESON. Cette poudre peut avoir une surface spécifique de 7 m²/g, la talle moyenne des grains étant de deux micromètres environ. Elle contient des impuretés comportant principalement de l'oxygène jusqu'à 4000 p.p.m (parties par million); et des métaux divers combinés au carbone ou à l'oxygène jusqu'à 3000 p.p.m.

On ajoute à cette poudre un pour cent en poids de bore cristallisé pulvérulent dispersé dans un liquide organique volatil tel que l'essence ou le cyclohexane.

La suspension ainsi obtenue est moulue dans un broyeur à billes d'acier. A titre indicatif, pour une suspension contenant 40 g de mélange de carbure de silicium-bore dans 140 cm³ de cyclohexane, le broyeur comporte 1,6 kg de billes en rotation à une vitesse de 190 t/mm pendant 4 heures.

Après broyage les produits en suspension sont filtrés et séchés en étuve.

La poudre séchée ainsi obtenue contient une quantité assez importante de fer provenant des billes et du corps du broyeur. Cette poudre subit donc un traitement à l'acide chlorhydrique dilué à chaud jusqu'à élimination totale du fer, puis un lavage à l'eau désionisée.

La suspension résultant du lavage est décantée puis séchée en étuve après élimination de l'eau en excès. Dans les conditions particulières précisées ci-dessus, la poudre ainsi séchée présente une surface spécifique de 13 m²/g.

Cette poudre est alors placée dans un creuset en carbone au centre d'un four à résistance de graphite. Le four est muni d'une pompe à vide qui permet d'abaisser la pression dans le four jusqu'à 5 · 10⁻⁶ Torr environ (666,6 · 10⁻⁶ Pa). On élève ensuite progressivement la température du four de façon à atteindre une température maximale comprise entre 1200 et 1400° C au bout d'une heure.

Au cours dè la montée en température on observe un dégagement gazeux provenant de la poudre, ce dégagement provoquant une remontée temporaire de la pression dans le four.

La température maximale est maintenue pendant une heure environ, puis on coupe l'alimentation électrique du four.

Après ce traitement thermique, le produit recueilli dans le creuset possède une surface spécifique qui n'est plus que de 4 m²/g.

On réalise ensuite une suspension de cette poudre dans de l'eau ou de l'alcool et on ajoute à cette suspension une laque phénolique dont l'extrait sec donne 60% de résidu carboné à la pyrolyse.

La suspension contenant la laque est placée dans une jarre en matière plastique, cette jarre contenant des billes d'acier revêtues de polytétrafluoréthylène, puis homogénéisée pendant une heure par rotation de cette jarre.

La suspension est alors séchée dans un évaporateur rotatif, et la poudre ainsi obtenue est tamisée.

On met ensuite en forme un échantillon de la pièce de céramique à réaliser.

Cette mise en forme est réalisée par exemple par une méthode bien connue qui consiste à presser la poudre dans une matrice en acier à une pression de l'ordre de 2000 bars. La mise en forme peut aussi être réalisée par pressage isostatique dans un doigtier en caoutchouc ou par coulage, dans un moule en plâtre, d'une suspension de la poudre dans de l'eau additionnée d'un matériau défloculant.

Cet échantillon est enfin fritté sous atmosphère d'argon à une température de l'ordre de 2100° C pendant 30 minutes environ.

La pièce de céramique de carbure de silicium obtenue après frittage a une densité qui peut être comprise, à titre d'exemple, entre 90 et 98% de la densité théorique du carbure de silicium. Elle présente des propriétés chimiques et mécaniques compatibles avec l'utilisation de ce matériau pour la fabrication des composants de turbines à gaz et de moteurs Diesel. Son module de rupture en flexion trois points est supérieur à 400 M Pa à 1400° C.

Selon la deuxième forme d'exécution de l'objet de la présente invention, on utilise également au départ une poudre commerciale de carbure de silicium, de variété structurale alpha, obtenue par le procédé ACHESON. Dans l'exemple décrit, cette poudre a une surface spécifique de 7 m²/g environ. Elle peut contenir des impuretés comportant principalement de l'oxygène jusqu'à 4000 p.p.m., des métaux divers et du silicium, combinés ou non à l'oxygène jusqu'à 3000 p.p.m.

Cette poudre est placée dans un creuset en carbone au centre d'un four à résistance de graphite, ce four étant muni d'une pompe à vide. Avantageusement, afin de diminuer le prix de revient, cette pompe peut être une pompe à vide primaire permettant d'obtenir une pression de l'ordre de 1 torr (133,3 Pa), mais il est également possible d'utiliser une pompe à vide secondaire permettant d'obtenir un vide de l'ordre de 5 · 10⁻⁶ torr environ.

On élève ensuite progressivement la température du four de façon à atteindre une température maximale comprise entre 1200° C et 1600° C.

Si l'on utilise une pompe à vide secondaire, on observe alors une remontée temporaire de la pression dans le four, cette remontée étant provoquée par les gaz qui se dégagent de la poudre.

La température maximale est maintenue pendant un intervalle de temps qui peut varier de 5 minutes à 6 heures selon la température, la capacité de pompage et la quantité d'impuretés présente dans la poudre en traitement.

De préférence, la température maximale du four est réglée à une valeur élevée sensiblement égale à 1600° C de façon à réduire la durée du traitement thermique. A titre d'exemple, un traitement thermique qui s'effectue en une heure à 1400° C peut être réalisé en cinq minutes à 1600° C.

Après le traitement thermique, la poudre possède une surface spécifique de l'ordre de 2 m²/g, et comporte une quantité résiduelle d'oxygène de l'ordre de 500 p.p.m. La diminution de la surface spécifique de la poudre, provoquée par le traitement thermique, correspond en fait à une réduction de la proportion des particules les plus fines de la poudre. Le traitement thermique provoque une perte de poids qui peut atteindre, à titre d'exemple, 6 à 7% du poids de la poudre non traitée.

On ajoute à la poudre traitée un pour cent en poids de bore cristallisé pulvérulent par dispersion du mélange dans un liquide organique volatil tel que l'essence ou le cyclohexane.

La suspension ainsi réalisée est moulue dans un broyeur à billes d'acier. A titre indicatif, pour une suspension contenant 30 g de mélange de carbure de silicium-bore dans 140 cm³ de cyclohexane, le broyeur comporte 1,6 kg de billes de diamètre 3 mm, en rotation à une vitesse de 300 t/mn pendant 4 heures.

La poudre séchée contient une quantité assez importante de fer provenant des billes et du corps du broyeur. Cette poudre subit donc un traitement à l'acide chlorhydrique dilué jusqu'à élimination quasi totale du fer, puis un lavage à l'eau désionisée acidulée.

La suspension résultant du lavage est décantée puis séchée en étuve après élimination de l'eau en excès.

La poudre ainsi obtenue possède une surface spécifique de l'ordre de 9 m²/g. Cette valeur est nettement supérieure à celle (4 m²/g) de la poudre obtenue, à partir d'une poudre initiale analogue, dans la première forme d'exécution du procédé, dans laquelle les opérations de traitement thermique et de broyage sont inversées.

On réalise ensuite une suspension de la poudre dans de l'eau ou de l'alcool et on ajoute à cette suspension une laque phénolique dont l'extrait sec donne 60% de résidu carboné à la pyrolyse.

La suspension contenant la laque est placée dans une jarre en matière plastique, cette jarre contenant des billes d'acier revêtues de polytétrafluoréthylène, puis homogénéisée pendant une heure par rotation de cette jarre.

La suspension est alors séchée dans un évaporateur rotatif et la poudre ainsi obtenue est tamisée.

On met ensuite en forme un échantillon de la pièce céramique à réaliser.

Cette mise en forme est réalisée par exemple par une méthode bien connue qui consiste à presser la poudre dans une matrice en acier à une pression comprise entre 500 et 2000 bars. La mise en forme peut aussi être réalisée par pressage isostatique dans un doigtier en caoutchouc ou par coulage, dans un moule en plâtre, d'une suspension de la poudre dans de l'eau additionnée d'un matériau défloculant.

L'échantillon est enfin fritté sous atmosphère d'argon à une température de l'ordre de 2100°C pendant 30 minutes environ.

Les pièces de céramique de carbure de silicium obtenues après frittage ont une densité comprise, selon les échantillons entre 95 et 98% de la densité théorique du carbure de silicium.

On voit que, dans la deuxième forme d'exécution du procédé selon l'invention, les pièces de céramique obtenues ont une densité plus reproductible.

Ces pièces peuvent être utilisées pour la fabrication de composants de turbines à gaz ou de moteurs Diesel.

Par rapport au procédé selon l'art antérieur décrit dans l'article précité, il apparait que le procédé selon l'invention, dans les deux formes d'exécution décrites ci-dessus, présente l'avantage de réaliser l'élimination de l'oxygène et de la silice présents dans la poudre initiale par un traitement thermique sous vide beaucoup plus simple et efficace que le traitement chimique à l'acide fluorhydrique utilisé dans l'art antérieur.

De plus l'addition de bore est réalisée avant le broyage, ce qui permet d'utiliser une poudre de bore à grains plus gros donc moins chère et de faire l'économie d'une opération de mélange.

Il convient de remarquer aussi que l'addition de carbone est réalisée sous forme d'une laque phénolique beaucoup moins chère que le polyphènylène utilisé dans l'art antérieur. Cette laque est soluble dans des solvants tels que l'eau ou l'alcool qui ne dégagent pas de vapeurs nocives comme le benzène.

Enfin il n'est pas nécessaire, dans le procédé selon l'invention, d'incorporer un liant organique dans la poudre au moment de la mise en forme de l'échantillon.

**Revendications**

1. Procédé d'élaboration d'une céramique dense en carbure de silicium, consistant:

— à former un mélange de poudres
 — en ajoutant du bore pulvérulent à une poudre de carbure de silicium en phase alpha,
 — en ajoutant à la poudre ainsi obtenue un produit carboné disposé dans un solvant, et
 — en séchant et en tamisant la suspension ainsi obtenue,
 la formation du mélange de poudres comportant en outre
 — un broyage fin d'au moins la poudre de carbure de silicium disposée dans un liquide organique volatil, ce broyage étant suivi d'un séchage,
 — et, avant l'addition du produit carboné, un traitement thermique d'au moins la poudre de carbure de silicium,
— puis à mettre en forme sous pression un échantillon du mélange de poudres et à fritter l'échantillon mis en forme sous atmosphère neutre à une température de l'ordre de 2100°C, caractérisé en ce que:

— le traitement thermique est effectué sous vide à une température comprise entre 1200°C et 1600°C,
— l'addition de bore est réalisée avant le broyage, celui-ci s'effectuant ainsi sur les poudres de carbure de silicium et de bore mélangées,
— le produit carboné est une laque phénolique,
— et, après le traitement thermique et avant le frittage, le mélange est homogénéisé, puis séché et tamisé.

2. Procédé selon la revendication 1, caractérisé en ce que le broyage est effectué dans un broyeur à billes d'acier et qu'il comporte en outre, après le broyage et avant l'addition du produit carboné, un traitement à l'acide chlorhydrique suivi d'un lavage.

3. Procédé selon la revendication 1, caractérisé en ce que l'homogénéisation est effectuée dans une jarre tournante contenant des billes d'acier revêtues de polytétrafluoréthylène.

4. Procédé selon la revendication 1, caractérisé en ce que le solvant de la laque phénolique est de l'eau.

5. Procédé selon la revendication 1, caractérisé en ce que le solvant de la laque phénolique est de l'éthanol.

6. Procédé selon la revendication 1, caractérisé en ce que le traitement thermique est réalisé après l'addition de bore à la poudre de carbure de silicium, ce traitement thermique s'effectuant sur les poudres de carbure de silicium et de bore mélangées, à une température comprise entre 1200 et 1400°C.

7. Procédé selon la revendication 1, caractérisé en ce que le traitement thermique est réalisé avant l'addition de bore à la poudre de carbure de silicium, ce traitement s'effectuant à une température voisine de 1600° C.

8. Procédé selon la revendication 7, caractérisé en ce que le traitement thermique est réalisé sous un vide primaire de l'ordre de un torr (133,3 Pa).

**Ansprüche**

1. Verfahren zur Herstellung einer dichten Keramik aus Siliciumcarbid, das darin besteht,

— eine Pulvermischung herzustellen,
    — indem man pulverförmiges Bor einem Siliciumcarbidpulver in der Alphaphase hinzufügt,
    — indem man dem so erhaltenen Pulver ein kohlenstoffhaltiges Produkt hinzufügt, das sich in einem Lösungsmittel befindet, und
    — indem man die so erhaltene Suspension trocknet und siebt,
    wobei die Bildung der Pulvermischung außerdem
    — ein feines Zermahlen zumindest des Siliciumcarbidpulvers, das sich in einer flüchtigen organischen Flüssigkeit befindet, wobei dieses Zermahlen von einem Trocknen gefolgt wird,
    — und, vor der Zugabe des kohlenstoffhaltigen Produkts, eine Wärmebehandlung zumindest des Siliciumcarbidpulvers umfaßt,
— dann unter Druck eine Probe der Pulvermischung in Form zu bringen und die in Form gebrachte Probe unter neutraler Atmosphäre bei einer Temperatur von ca. 2100° C zu sintern,
dadurch gekennzeichnet, daß
— die Wärmebehandlung unter Vakuum bei einer Temperatur von zwischen 1200 und 1600° C erfolgt,
— die Beifügung von Bor vor dem Zermahlen erfolgt, wobei die Mischung aus Siliciumcarbid- und Borpulver zermahlen wird,
— das kohlenstoffhaltige Produkt ein Phenollack ist,
— und nach der Wärmebehandlung und vor dem Sintern die Mischung homogenisiert und dann getrocknet und gesiebt wird.

2. Verfahren nach Anspruch 1, dadurch gekennzeichnet, daß das Zermahlen in einem Stahlkugeln enthaltenden Zerkleinerer erfolgt und daß das Verfahren außerdem nach dem Zermahlen und vor dem Hinzufügen des kohlenstoffhaltigen Produkts eine Behandlung mit Chlorwasserstoffsäure, gefolgt von einem Waschvorgang, umfaßt.

3. Verfahren nach Anspruch 1, dadurch gekennzeichnet, daß die Homogenisierung in einem drehenden Kessel durchgeführt wird, der Stahlkugeln enthält, die mit Polytetrafluoräthylen überzogen sind.

4. Verfahren nach Anspruch 1, dadurch gekennzeichnet, daß das Lösungsmittel des Phenollacks Wasser ist.

5. Verfahren nach Anspruch 1, dadurch gekennzeichnet, daß das Lösungsmittel des Phenollacks Äthanol ist.

6. Verfahren nach Anspruch 1, dadurch gekennzeichnet, daß die Wärmebehandlung nach dem Hinzufügen von Bor zum Siliciumcarbidpulver erfolgt, wobei diese Wärmebehandlung auf die Mischung aus Siliciumcarbidpulver und Borpulver bei einer Temperatur von zwischen 1200 und 1400° C angewandt wird.

7. Verfahren nach Anspruch 1, dadurch gekennzeichnet, daß die Wärmebehandlung vor dem Hinzufügen des Bors zum Siliciumcarbidpulver erfolgt, und zwar bei einer Temperatur nahe 1600° C.

8. Verfahren nach Anspruch 7, dadurch gekennzeichnet, daß die Wärmebehandlung unter einem Primärvakuum von etwa einem Torr (133,3 Pa) erfolgt.

**Claims**

1. A method of manufacturing a dense silicon carbide ceramic body, consisting of:

— forming a powder mixture
    — by adding powdered boron to a silicon carbide powder in alpha phase,
    — by adding to the powder thus obtained a carbonated substance disposed in a solvent, and
    — by drying and sieving the suspension thus obtained,
    the formation of the powder mixture further comprising
    — a fine milling of at least the silicon carbide powder disposed in a volatile organic liquid, this milling being followed by drying operation,
    — and, prior to the adding of the carbonated substance, a thermotreatment of at least the silicon carbide powder,
— then bringing a sample of the powder mixture into shape under pressure and sintering the sample brought into shape under neutral atmosphere at a temperature of about 2100° C,
characterized in that:
— the thermotreatment is effected under vacuum at a temperature included between 1200° C and 1600° C,
— the adding of the boron is realized before the milling operation, the latter being thus effected on the mixed silicon carbide and boron powders,
— the carbonated substance is a phenolic lacquer,
— and, after the thermotreatment and before the sintering, the mixture is homogenized, then dried and sieved.

2. A method according to claim 1, characterized in that the milling operation is effected in a steel ball mill and in that it further comprises, after the milling and prior to the adding of the carbonated substance, a treatment with hydrochloric acid followed by a washing operation.

3. A method according to claim 1, characterized in that the homogenization is effected in a turning jar containing steel balls which are coated with polytetrafluorethylene.

4. A method according to claim 1, characterized in that the solvent of the phenolic lacquer is water.

5. A method according to claim 1, characterized in that the solvent of the phenolic lacquer is ethanol.

6. A method according to claim 1, characterized in that the thermotreatment is realized after the addition of boron to the silicon carbide powder, this thermotreatment being effected on the mixture of silicon carbide and boron powders at a temperature included between 1200 and 1400° C.

7. A method according to claim 1, characterized in that the thermotreatment is realized prior to the addition of boron to the silicon carbide powder, this treatment being effected at a temperature near 1600° C.

8. A method according to claim 7, characterized in that the thermotreatment is realized under a primary vacuum of about one torr (133,3 Pa).